# EUROPÄISCHE PATENTSCHRIFT

(11) **EP 0 568 106 B1**
(45) Veröffentlichungstag und Bekanntmachung des Hinweises auf die Patenterteilung: **27.09.1995**
(21) Anmeldenummer: 93108231.7
(22) Anmeldetag: 08.07.1992
(51) Int. Cl.: F16B 39/30, F16B 39/28

(54) **Selbsthemmendes Gewinde**
Self-locking screw-thread
Filetape autobloquant

(30) Priorität: 25.07.1991 US 735435
(43) Veröffentlichungstag der Anmeldung: 03.11.1993
(62) Teilanmeldung aus: 92111604.2
(73) Patentinhaber: Härle, Anton, Prof. Dr., D-48161 Münster (DE)
(72) Erfinder: Härle, Anton, Prof. Dr., D-48161 Münster (DE)
(74) Vertreter: Habbel, Hans-Georg, Dipl.-Ing.

(56) Entgegenhaltungen:
- EP-A- 0 065 344
- EP-A- 0 441 224
- CH-A- 650 842
- DE-A- 1 903 068
- DE-A- 1 914 477
- DE-A- 2 645 519
- US-A- 4 586 861

## Beschreibung

Die Erfindung bezieht sich auf ein selbsthemmendes Gewinde gemäß dem Oberbegriff des Anspruches 1.

Ein gattungsbildendes, selbsthemmendes Gewinde wird z. B. in der DE-26 45 519 C2 beschrieben, wobei dieses Gewinde sich dadurch kennzeichnet, daß der Gewindefuß zu einer schräg zur Gewindeachse verlaufenden Rampe ausgebildet ist und der Neigungswinkel der Rampe zur Gewindeachse jeweils konstant bleibend 15 bis 45°, vorzugsweise 20 bis 35° beträgt. Diese bekannte Anordnung hat den Nachteil , daß eine selbsthemmende Wirkung nur in einer Schraubrichtung erreichbar ist. In vielen Einsatzzwecken in der Technik ist es aber erwünscht, eine Mutter auf einer Gewindestange nach beiden Seiten arretieren zu können.

Außerdem ist bei diesem gemaß der DE-26 45 519 C2 bekannten Gewinde die erforderliche Längsverschiebung, um zur Selbsthemmung zu kommen, relativ groß.

Aus der US-A-45 86 861 ist ebenfalls ein selbsthemmendes Gewinde bekanntgeworden, bei dem die bei der Einrichtung gemäß der DE-26 45 519 C2 vorgesehene Rampe gewölbt ausgebildet ist. Durch diese Anordnung soll die Widerstandsfähigkeit gegen Vibrationen verbessert werden. Wie aber deutlich die Darstellung zeigt, ist bei dieser Anordnung immer noch ein Zurückrutschen des deformierten Grates des Zahnes von der Rampe zum Gewindetiefsten möglich.

Die Verriegelungswirkung bei selbstverriegelnden Gewinden hat u. a. ihre Grundlage in einer elastischen Deformation der Kontaktflächen der Gewindepartner. Nur solange eine gewisse Vorspannung gegeben ist, wird die Riegelwirkung aufrechterhalten.

Der Erfindung liegt die Aufgabe zugrunde, durch Gestaltung der Klemmrampe von Mutter bzw. Bolzen die Riegelwirkung noch zu verstärken und zu sichern und dabei gleichzeitig Toleranzen auszugleichen.

Diese der Erfindung zugrundeliegende Aufgabe wird durch die kennzeichnenden Merkmale des Anspruches 1 gelöst.

Mit anderen Worten ausgedrückt wird eine optimale Riegelwirkung dann erzielt, wenn der überwiegende Teil der anliegenden Kräfte in der Querrichtung wirkt. Dies erfordert daher eine nahezu achsparallele Ausgestaltung der Klemmrampe . Wegen der elastischen Deformierung der Gewindespitzen muß jedoch eine gewisse Neigung vorliegen. Aufgrund der Toleranz muß die Neigung der Klemmrampe aber relativ groß sein, sonst kommt es zu keiner Riegelwirkung mehr, wenn die minimalste Schraube mit der maximalsten Mutter kombiniert werden soll.

Durch den erfindungsgemäßen Aufbau der Klemmrampe aus verschiedenen Abschnitten mit unterschiedlicher Neigung läßt sich das Toleranzproblem auf engstem Raum lösen und gleichzeitig eine optimale Riegelwirkung erzielen. Am Ende und am Anfang der Klemmfläche muß dabei die Neigung relativ groß, im zentralen Bereich dagegen relativ gering sein.

Die Teile mit großer Neigung können gerade oder gewölbt sein. Der Teil mit geringerer Neigung ist vorzugsweise gerade.

Der zentrale Teil weist eine Neigung auf, die zwischen 15° und 30° liegt, vorzugsweise aber 13° beträgt.

Der bei den selbsthemmenden Gewinden auftretende radiale Druck kann dazu führen, daß sich das Muttergewinde radial dehnt, so daß dadurch die Verriegelungswirkung beeinträchtigt wird. Bei der Verschiebung des Bolzens auf der Klemmrampe der Mutter entsteht eine radialgerichtete Kraft, und dehnt sich dann die Mutter radial aus, verringert sich die elastische Vorspannung und damit die Verriegelungswirkung.

Um diese Ausdehnungeinzuschrähken, wird vorgeschlagen, daß die Mutter an ihrer Außenseite eckig mit ungerader Eckenzahl ausgebildet ist, derart, daß die Außenseiten keine parallelen Flächen aufweisen. Vorzugsweise weist die Mutter eine dreieckige Form auf, jedoch auch andere Außenformen, die keine parallelen Flächen aufweisen, wie z. B. fünfeckige Außenformen wirken sich hier vorteilhaft aus.

Ausführungsbeispiele der Erfindung werden nachfolgend anhand der Zeichnungen erläutert.

Die Zeichnungen zeigen dabei in
- Fig. 1: einen Querschnitt durch eine Schraubverbindung, in
- Fig. 2: einen Ausschnitt aus einem Gewindebereich, in
- Fig. 3: in einer schematisch und vergrößerten Darstellung die Ausbildung der Klemmrampen, in
- Fig. 4: eine erste Ausführungsform einer Mutter, die an ihrer Außenseite eckig ausgebildet ist, aber keine parallelen Flächen aufweist, in
- Fig. 5: eine abgeänderte Ausführungsform und in
- Fig. 6: eine abgeänderte Ausführungsform der grundsätzlichen erfindungsgemäßen Anordnung.

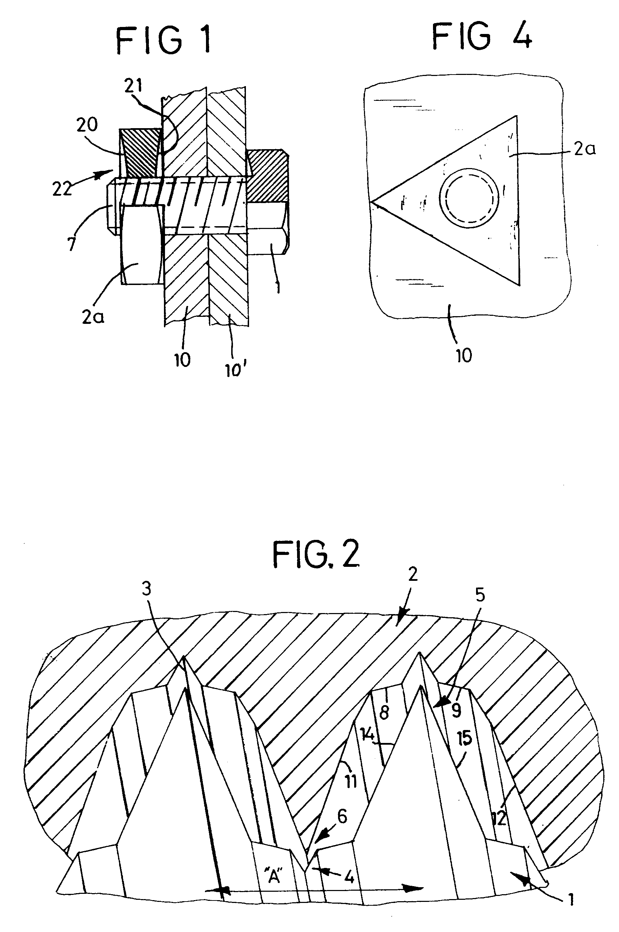

In Fig. 1 ist eine Schraubverbindung dargestellt mit einem Schraubbolzen 1, der ein Außengewinde 7 aufweist. Dieses Außengewinde 7 kämmt mit einem Innengewinde, das in einer Mutter 2a angeordnet ist. Wenn der beispielsweise sechseckig ausgebildete Schraubenkopf des Bolzens 1 gedreht wird und die beispielsweise dreieckig an ihrer Außenseite ausgebildete Mutter 2a festgelegt wird, zwingt das Gewinde 7 die Mutter 2a in Richtung auf den Schraubenkopf des Bolzens 1 zu und preßt dabei die beiden aneinander festzulegenden Bauteile 10 und 10' fest aufeinander. Außerdem ist aus Fig. 1 erkennbar, daß die Mutter 2a Auflageflächen 20 und 21 aufweist, die nicht parallel zu den Oberseiten der Bauteile 10 und 10' ausgerichtet sind, sondern diese Auflageflächen weisen eine Wölbung derart auf, daß die eigentliche Mutter im Normalfall nur im äußeren Randbereich an dem Bauteil 10 anliegt. Die Ausnehmung oder Wölbung kann konisch oder konkav sein und eine Neigung von 2° bis 20° besitzen.

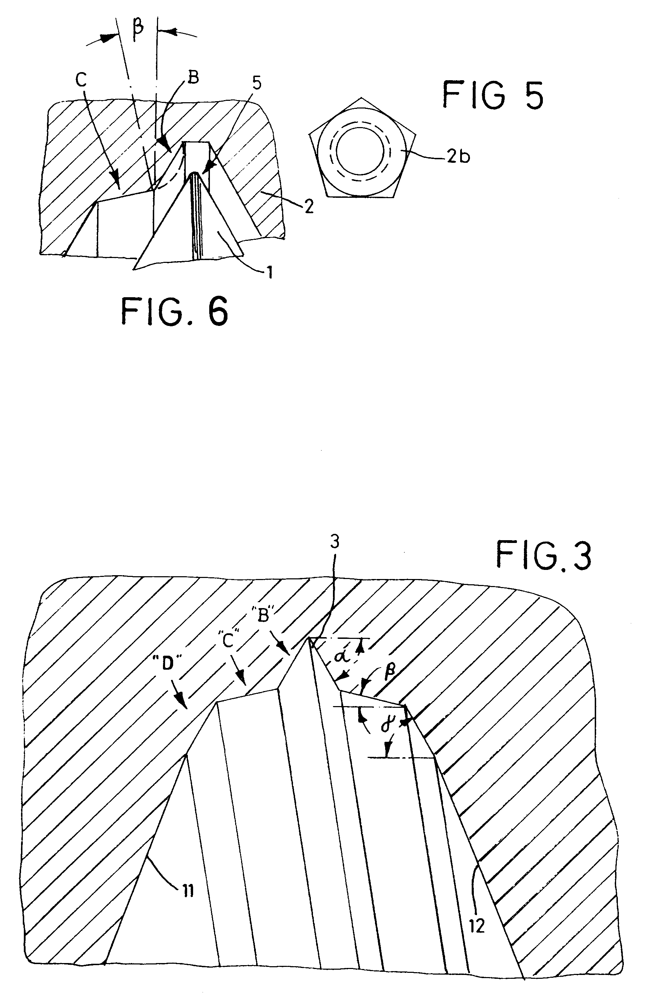

Die Ausbildung der Gewinde ist deutlicher aus Fig. 2 zu erkennen. In dieser Darstellung weist der Bolzen 1 einen Gewindefuß 4 auf und einen Grat 5. Eine Mutter 2 besitzt einen Grat 6 und einen Gewindefuß 3. Bei der dargestellten Ausführungsform sind sowohl im Bereich der Gewindefüße 4 des Bolzens 1 wie auch im Bereich der Gewindefüße 3 der Mutter 2 Klemmrampen 8 und 9 vorgesehen, deren genaue Ausbildung deutlicher aus der Darstellung in Fig. 3 ersichtlich ist.

An die Klemmrampen 8 und 9 schließen sich die Flankenbereiche 11 und 12 an und bei dem in Fig. 2 dargestellten Ausführungsbeispiel sind diese Flankenbereiche 11 und 12 nicht kongruent zu Flankenbereichen 14 und 15 des Bolzens 1.

In Fig. 2 ist die sogenannte Gewindeachse A eingezeichnet.

Wie Fig. 3 zeigt, setzt sich die eigentliche Klemmrampe z.B. aus drei unterschiedlichen Abschnitten zusammen, die in Fig. 2 mit B, C und D bezeichnet sind. Hierbei ist der Rampenabschnitt C der mittlere Bereich, der Rampenabschnitt B der dem Gewindefuß 3 am nächstenliegende Bereich und der Rampenabschnitt D der der nachfolgenden Flanke 11 bzw. 12 am nächstenliegende Bereich.

Die Rampenabschnitte B, C und D weisen nicht gleiche Neigung gegenüber der Gewindeachse A auf. So weist der Rampenabschnitt B gegenüber einer parallel zur Gewindeachse A verlaufenden Linie einen Winkel α auf, der beispielsweise 60° beträgt.

Der Rampenabschnitt C weist gegenüber einer parallel zur Gewindeachse A verlaufenden Linie einen Winkel β auf, der beispielsweise in einer Größenordnung zwischen 5 und 30° liegt. Vorzugsweise beträgt der Winkel β 13°.

Schließlich schließt der Rampenabschnitt D mit einer parallel zur Gewindeachse A verlaufenden Linie einen Winkel α ein, der ebenfalls wieder etwa 60° beträgt. Die Winkel α und α können von den genannten 60° in einer Größe von bis zu 20° abweichen.

Aus der vorausgehenden Erläuterung ist ersichtlich, daß auf jeden Fall der Klemmrampenabschnitt C eine kleinere Neigung als der Klemmrampenabschnitt B oder D besitzt.

Fig. 6 zeigt eine etwas abgeänderte Ausführungsform des vorher erläuterten Ausführungsbeispiels, nämlich bei dieser Darstellung sind nur zwei Klemmrampenabschnitte B und C vorgesehen. Auch hier trägt der Neigungswinkel des Abschnittes C gegenüber der Achse des Gewindes beispielsweise 13°, und dieser Winkel ist als Winkel β noch einmal eingezeichnet. Bei dieser Darstellung ist außerdem in besserer Anlehnung an die Praxis der Grat 5 abgerundet ausgebildet dargestellt. Auch ist durch die gestrichelte Darstellung des Abschnittes B verdeutlicht, daß auch bei dieser Ausführungsform der Abschnitt B gewölbt ausgebildet sein kann.

Bei der Darstellung in Fig. 3 sind die Rampenabschnitte B, C und D geradlinig dargestellt. Es ist selbstverständlich aber auch möglich, daß die Rampenabschnitte B und D zum Gewindeinneren hin gewölbt sind, wobei der Rampenabschnitt B konvex und der Rampenabschnitt D konkav gewölbt sen kann. Durch die konkave Wölbung des Rampenabschnittes D werden die Toleranzbedingungen zwischen dem Bolzen und der Mutter verbessert. Der Rampenabschnitt gemäß Fig. 6 stellt ein Kreissegment dar, und der Rampenabschnitt C bildet die Tangente an diesen Kreis. Der Rampenabschnitt B kann auch ein Segment aus einem parabelförmigen oder hyperbelförmigen Kurvenverlauf sein.

Durch diese Ausbildung wird erreicht, daß ein "Zurückrutschen" des sich auf den Rampenflächen aufpressenden und verformenden Grates des zugeordneten Gewindeteiles nicht erfolgen kann.

In Fig. 4 ist eine Mutter 2a dargestellt, die eine dreieckige Außenform aufweist. Durch diese Anordnung wird der radialen Ausdehnung der Mutter bei Einwirken des entsprechenden Druckes durch den Schraubbolzen entgegengewirkt.

In Fig. 5 ist eine Mutter 2b dargestellt, die eine fünfeckige Außenform aufweist, d. h. keine der Außenflächen des Randes der Mutter sind zu einer anderen Fläche parallel.

## Patentansprüche

1. Selbsthemmendes Gewinde an zwei miteinander durch Schraubung zu verbindenden Elementen, beispielsweise einem Bolzen (1) und einer Mutter (2), bei denen das Gewinde freilaufend ist, bis eine vorgegebene axiale Belastung einwirkt und einen Kontakt zwischen den Gewinden bewirkt, wobei der Gewindefuß (3, 4) wenigstens eines Elementes, wenigstens eine schräg zur Gewindeachse (A) verlaufende Klemmrampe (8, 9) aufweist, an der der Grat (5, 6) des anderen Elementes bei Ausübung eines entsprechenden Anzugmomentes angreift, dadurch gekennzeichnet, daß die Klemmrampe (8, 9) aus mindestens zwei unterschiedlich geneigten Abschnitten (B, C, D) besteht, von denen ein erster Abschnitt (C) im Querschnitt geradlinig ausgebildet ist und eine Neigung β zwischen 5° und 30° gegenüber der Gewindeachse (A) aufweist, während der oder die unmittelbar angrenzenden Abschnitte (B, D) gegenüber der Gewindeachse (A) eine größere Neigung α γ als der erste Abschnitt (C) aufweisen.

2. Selbsthemmendes Gewinde nach Anspruch 1, dadurch gekennzeichnet, daß drei unterschiedlich geneigte Abschnitte (B, C, D) vorgesehen sind.

3. Selbsthemmendes Gewinde nach Anspruch 1 oder 2, dadurch gekennzeichnet, daß der oder die angrenzenden Abschnitte (B, D) eine Neigung α γ von etwa 60° + - 20° aufweisen.

4. Selbsthemmendes Gewinde nach Anspruch 1, dadurch gekennzeichnet, daß der erste Abschnitt (C) eine Neigung β von 8° bis 15° aufweist.

5. Selbsthemmendes Gewinde nach einem der Ansprüche 1 bis 4, dadurch gekennzeichnet, daß die angrenzenden Abschnitte (B, D) geradlinig ausgebildet sind.

6. Selbsthemmendes Gewinde nach einem der Ansprüche 1 bis 4, dadurch gekennzeichnet, daß mindestens einer der angrenzenden Abschnitte (B, D) gewölbt ausgebildet ist.

7. Selbsthemmendes Gewinde nach einem der Ansprüche 1 bis 6, dadurch gekennzeichnet, daß der Übergang der Abschnitte (B, C, D) zueinander abgerundet ausgebildet ist.

8. Selbsthemmendes Gewinde nach Anspruch 1, dadurch gekennzeichnet, daß die Mutter (2) an ihrer Außenseite eckig mit ungerader Eckzahl ausgebildet ist, derart, daß die Außenseite keine parallelen Flächen aufweisen.

9. Selbsthemmendes Gewinde nach Anspruch 8, dadurch gekennzeichnet, daß die Außenseite der Mutter (2a) dreieckig ausgebildet ist.

10. Selbsthemmendes Gewinde nach Anspruch 8, dadurch gekennzeichnet, daß die Außenseite der Mutter (2b) fünfeckig ausgebildet ist.

11. Selbsthemmendes Gewinde nach Anspruch 8, dadurch gekennzeichnet, daß die Auflageflächen (20, 21) der Mutter und/oder des Bolzens (1) eine konische oder sphärische Einbuchtung (22) aufweisen.

## Claims

1. A self-locking thread on two members to be connected together by screwing, for example a bolt (1) and a nut (2), in which the thread is free-running until a predetermined axial load acts and effects contact between the threads, the thread foot (3) or (4) of at least one member comprising at least one clamping ramp (8, 9) running at an angle to the thread axis (A), on which clamping ramp (8) or (9) there acts the ridge (5, 6) of the other member upon exertion of a corresponding clamping torque; characterized in that the clamping ramp (8, 9) consists of at least two differently inclined portions (B, C, D), of which a first portion (C) is of rectilinear cross-sectional construction and exhibits an inclination β of between 5° and 30° with respect to the thread axis (A), while the directly adjacent portion(s) (B, D) exhibit a greater inclination α, γ than the first portion (C) with respect to the thread axis (A).

2. A self-locking thread according to claim 1, characterized in that three differently inclined portions (B, C, D) are provided.

3. A self-locking thread according to claim 1 or claim 2, characterized in that the adjacent portion(s) (B, D) exhibit an inclination α, γ of approximately 60° ± 20°.

4. A self-locking thread according to claim 1, characterized in that the first portion (C) exhibits an inclination β of from 8° to 15°.

5. A self-locking thread according to any one of claims 1 to 4, characterized in that the adjacent portions (B, D) are of rectilinear construction.

6. A self-locking thread according to any one of claims 1 to 4, characterized in that at least one of the adjacent portions (B, D) is of curved construction.

7. A self-locking thread according to any one of claims 1 to 6, characterized in that the transition points of the portions (B, C, D) one to another are of rounded construction.

8. A self-locking thread according to claim 1, characterized in that the nut (2) is constructed angularly on its outside with an odd number of angles, in such a way that the outside does not exhibit any parallel faces.

9. A self-locking thread according to claim 8, characterized in that the outside of the nut (2a) is of triangular construction.

10. A self-locking thread according to claim 8, characterized in that the outside of the nut (2b) is of pentagonal construction.

11. A self-locking thread according to claim 8, characterized in that the bearing faces (20, 21) of the nut and/or the bolt (1) comprise a conical or spherical indentation (22).

## Revendications

1. Filet autobloquant sur deux éléments devant être reliés entre eux par vissage, par exemple un boulon (1) et un écrou (2), dans lesquels le filet tourne librement jusqu'à ce qu'une charge axiale prédéterminée s'exerce et réalise un contact entre les filets, le pied de filet (3, 4) d'au moins un élément présentant au moins une rampe de blocage (8, 9) orientée obliquement par rapport à l'axe de filet (A) et sur laquelle l'arête (5, 6) de l'autre élément se met en prise lorsqu'un couple de serrage approprié est exercé, caractérisé en ce que la rampe de serrage (8, 9) se compose d'au moins deux sections (B, C, D) d'inclinaison différente, dont une première section (C) est rectiligne en section et présente par rapport à l'axe de filet (A) une inclinaison β de 5° à 30°, alors que la ou les sections (B, D) immédiatement limitrophes présentent par rapport à l'axe de filet (A) une inclinaison α, γ plus grande que la première section (C).

2. Filet autobloquant selon la revendication 1, caractérisé en ce qu'il est prévu trois sections (B, C, D) d'inclinaison différente.

3. Filet autobloquant selon la revendication 1 ou 2, caractérisé en ce que la ou les sections limitrophes (B, D) présentent une inclinaison α, γ de 60° ± 20° environ.

4. Filet autobloquant selon la revendication 1, caractérisé en ce que la première section (C) présente une inclinaison β de 8° à 15°.

5. Filet autobloquant selon l'une ou l'ensemble des revendications 1 à 4, caractérisé en ce que les sections limitrophes (B, D) sont rectilignes.

6. Filet autobloquant selon l'une ou l'ensemble des revendications 1 à 4, caractérisé en ce que l'une au moins des sections limitrophes (B, D) est courbe.

7. Filet autobloquant selon l'une ou l'ensemble des revendications 1 à 6, caractérisé en ce que la transition entre les différentes sections (B, C, D) est arrondie.

8. Filet autobloquant selon la revendication 1, caractérisé en ce que l'écrou (2) est de forme anguleuse à l'extérieur avec un nombre d'angles impair, de telle sorte que son côté extérieur ne présente pas de surfaces parallèles.

9. Filet autobloquant selon la revendication 8, caractérisé en ce que le côté extérieur de l'écrou (2a) est de forme triangulaire.

10. Filet autobloquant selon la revendication 8, caractérisé en ce que le côté extérieur de l'écrou (2b) est de forme pentagonale.

11. Filet autobloquant selon la revendication 8, caractérisé en ce que les surfaces d'appui (20, 21) de l'écrou et/ou du boulon (1) présentent un retrait (22) conique ou sphérique.
